# EUROPEAN PATENT APPLICATION

(11) **EP 4 218 417 A1**
(43) Date of publication of application: **02.08.2023**
(21) Application number: 23162736.5
(22) Date of filing: 18.10.2019
(51) Int. Cl.: A23C 11/10, A23L 19/00, A23L 19/10, A23L 19/12, A23L 2/66, A23L 29/212, A23L 33/115, A23L 11/60, A23L 11/65

(54) **MILK SUBSTITUTE**

(30) Priority: 18.10.2018 EP 18201254
(62) Divisional of application: 19828887.0
(71) Applicant: Coöperatie Koninklijke Avebe U.A., 9641 GK Veendam (NL)
(72) Inventor: TARAZANOVA, Mariya Alexeevna, 9641 GK Veendam (NL); VAN ES, Remco Maria, 9641 GK Veendam (NL)
(74) Representative: V.O.

(57) **Abstract**

The invention is directed to a milk substitute from starch and protein that are isolated from a root, tuber, cereal, nut or legume.

## Description

The invention is directed to a milk substitute, a method for preparing a milk substitute, and a powder composition.

Dairy milk is milk extracted from farm animals, such as e.g. cows. Dairy milk is generally considered healthy as it provides a source of calcium, protein, carbohydrates, lipids, and additional vitamins. However, some people do not consume dairy products for reasons related to digestion or allergies. Accordingly, there is a need for a milk substitute.

Various non-dairy milk products exist, such as, for example, soy-based milk having soy-derived ingredients. However, a problem with non-dairy milk is that it may have less than desirable organoleptic properties (such as taste or mouth feel).

The most common examples of non-dairy milk are typically nut- or legume-based, such as soy milk and almond milk. These types of non-dairy milk are typically prepared by grinding the entire nut or bean into a pulp and then mixing the pulp with water and other ingredients to obtain the non-dairy milk.

Soy milk is an example of a legume-based non-dairy milk. Soy milk is made from whole soybeans or soy flour. First, a slurry or purée is prepared by grinding and mixing the soybeans or soy flour with water. The slurry or purée is then typically heat-treated and sterilized. Insoluble residues are removed by filtration and further ingredients can be mixed or blended with the filtrate into a soy milk.

An example of nut-based non-dairy milk is almond milk. Nut-based non-dairy milk can be prepared by grinding nuts together with water and then blending and mixing the resulting nut-based liquid with further ingredients into a non-dairy milk product. Nut-based milk can also be prepared by first starting with a nut butter (obtained by grinding nuts and adding a fat or oil) and then mixing and blending the butter with water and further ingredients into a nut milk.

It is an object of the invention to provide alternative routes for preparing a milk substitute, in particular a non-dairy milk product.

It is a further object of the invention to provide a method for preparing a milk substitute, wherein the basis for the milk substitute can be provided by a wide variety of edible plant materials, such as roots, tubers, cereals, nuts or legumes.

Further, it is an object of the invention to provide a milk substitute with good organoleptic properties.

It is a further object to provide a milk substitute that has similar organoleptic properties as commercial regular milk, e.g. cow's milk.

### Methods for preparing a milk substitute

At least one of these objects has been met by providing a method for preparing a root-, tuber-, cereal-, nut- or legume-based milk substitute, which method comprises the steps of
- preparing an emulsifying agent by
   a) isolating starch from a root, tuber, cereal, nut or legume to obtain an isolated starch, and modifying at least a portion of said isolated starch to obtain an emulsifying starch; and/or
   b) isolating a native protein from a root, tuber cereal, nut or legume to obtain an emulsifying protein, and preferably, combining the emulsifying starch, if any, with the emulsifying protein, if any, to obtain the emulsifying agent; and
- isolating denatured protein from a root, tuber, cereal, nut or legume; and
- providing a plant-based or microbial lipid; and
- preparing an emulsion comprising at least 0.3 wt.% of said emulsifying agent, at least 0.2 wt.% of said denatured protein, and at least 1.0 wt.%, preferably at least 1.5 wt.% of said lipid;
wherein the combined amount of said denatured protein and said emulsifying protein (if any) in the emulsion is at least 0.5 wt.%.

The present invention is directed to a method of preparing a root-, tuber-, cereal-, nut- or legume-based milk substitute, comprising the steps of
- preparing an emulsifying agent by
   a) isolating a native protein from a root, tuber cereal, nut or legume to obtain an emulsifying protein; and
   b) optionally isolating starch from a root, tuber, cereal, nut or legume to obtain an isolated starch, modifying at least a portion of said isolated starch to obtain an emulsifying starch, and preferably combining said emulsifying protein with said emulsifying starch, if any, to obtain the emulsifying agent; and
- isolating denatured protein from a root, tuber, cereal, nut or legume; and
- providing a plant-based or microbial lipid; and
- preparing an emulsion comprising at least 0.3 wt.% of said emulsifying agent, at least 0.2 wt.% denatured protein, and at least 1.0 wt.% of said lipid; and
wherein the combined amount of said emulsifying protein and said denatured protein in the emulsion is at least 0.5 wt.%.

The inventors found that by first isolating the starch and protein from the plant source and then at a later step recombining these in the desired form and quantities allows for more control of the final composition and organoleptic properties of the milk substitute. Furthermore, the starch components could be modified after isolation, such as to provide the milk substitute with improved properties. Also, the method of the invention allows for including both native and denatured protein from the same species. Furthermore, the method makes it easy to carefully regulate the properties by varying the different starch and protein concentrations. In this way, it is for example possible to prepare a substitute that has a taste that closely resembles regular milk, such as cow's milk (or goat, sheep, etc).

The term "milk substitute" as used herein refers to an emulsion of lipid in water, which emulsion resembles milk from a mammal, in particular with respect to its organoleptic and nutritional properties. Furthermore, a milk substitute may contain similar ingredients as milk from a mammal, except that animal lipid and protein has been replaced with vegetable lipid and protein. The milk substitute is preferably a non-dairy product.

The term "non-dairy" as used herein with respect to a product refers to the absence of animal milk in a product. Also, no animal milk is used to prepare the product. A non-dairy product may further be essentially free of animal-derived proteins and preferably also essentially free of animal-derived lipids. Further, the product may be essentially free of lactose. The term "essentially free" with respect to a component may refer to the presence of less than 0.1 wt.%, more preferably less than 0.01, even more preferably less than 0.001, even more preferably the complete absence of said component.

The term "root-, tuber-, cereal-, nut- or legume-based" with respect to a product refers to the origin of its ingredients, in particular with respect to the origin of the proteins and/or lipids and/or starch present in the product. The majority of proteins and lipids present in a root-, tuber-, cereal-, nut- or legume-based milk substitute will typically originate from a root, tuber, cereal, nut, or legume, *i.e.* at least 50 wt.% of all proteins and of all lipids in the product, preferably at least 75 wt.%, more preferably at least 90 wt.%, even more preferably at least 95 wt.%, even more preferably at least 99 wt.%, even more preferably 99.9 wt.% of all proteins and of all lipids in the product.

The term "waxy" as used herein refers to a starch or modified starch comprising significantly more amylopectin than regular starch. In particular, the term "waxy starch" may refer to a starch or a modified starch wherein at least 90 % of the starch is amylopectin (accordingly, 10% or less of the starch is amylose). Preferably, at least 95%, more preferably at least 99% of the starch or modified starch is amylopectin.

The term "modified starch" as used herein can refer to an emulsifying starch or to a viscosifying starch. An emulsifying starch and a viscosifying starch are different types of starch.

According to the method of the invention, first the emulsifying agent, isolated denatured protein and lipid are provided. Thereafter, an emulsion in water is prepared from these ingredients.

The emulsifying agent may be an emulsifying starch or an emulsifying protein or a combination of these two. In the present invention, the emulsifying agent comprises an emulsifying protein, and preferably furthermore comprises an emulsifying starch.

In case the emulsifying agent comprises an emulsifying starch, the method comprises the step of isolating starch from a root, tuber, cereal, nut or legume to obtain an isolated starch, and modifying at least a portion of said isolated starch to obtain an emulsifying starch. The starch can be obtained using known techniques in the art. For example, potato starch can be isolated from potato as is known in the art, for example as is described by E.G. Mitch in Starch Chemistry and Technology page 481-487 (R.L. Whislter, J.N. Bemiller, E.F. Paschall; Academic press, Inc., 1984). The skilled person can adapt these methods to obtain starch from other root-, tuber-, cereal-, nut- or legume types, or can obtain starch from these other root-, tuber-, cereal-, nut- or legume types using common general knowledge.

An emulsifying starch is a starch which is capable of dissolving fat droplets in water. Suitable modifications for providing the starch with emulsifying properties are known in the art. Preferably, at least a portion of the isolated starch is subjected to an OSA (octenyl succinic anhydride) modification. Accordingly, the emulsifying starch is preferably an octenyl succinic anhydride (OSA) modified starch (also called a starch octenyl succinate). Preferably, the OSA modification is conducted such that the obtained OSA modified starch has a degree of substitution of 0.01-0.05 mole octenyl succinate per mole anhydride glucose unit. The emulsifying starch is further preferably a waxy starch. OSA-modified starch was found to be very effective in emulsifying oil, both in the presence and in the absence of a viscosifying agent. The preparation of octenylsuccinic ester of starch has been described in WO00/42076.

An emulsifying starch, if present, preferably is an OSA-modified starch, preferably an OSA modified waxy starch. In preferred embodiments, the emulsifying starch is cold-water soluble, i.e. is a pregelatinized starch. In further preferred embodiments, the emulsifying starch is an OSA-modified, amylomaltase-treated regular potato starch.

In the present invention where the emulsifying agent is or comprises an emulsifying protein, the method comprises the step of isolating a native protein from a root, tuber cereal, nut or legume to obtain an emulsifying protein. Contrary to denatured proteins, native proteins have good emulsifying properties. Thus, the emulsifying protein is or comprises a native protein, preferably a native protease inhibitor.

Processes to isolate native protein from plants are known in the art. The native protein is preferably a low molecular weight protein, having a molecular weight of below 35 kDa, preferably in the range of 4-30 kDa. The emulsifying protein is preferably a protein isolate comprising native protein, even more preferably the emulsifying protein is a native protease inhibitor isolate, preferably a potato protease inhibitor isolate. A protease inhibitor isolate may comprise different types of protease inhibitors. An efficient process for isolating native potato protein and native potato protein fractions with a high degree of purity from potato is described in WO2008/069650. The method for isolating potato protease isolate described on pages 5-8 of WO2008/069650 and the properties of the isolate are described on pages 9-11 of WO2008/069650, which are hereby incorporated by reference. The skilled person can adapt these methods to obtain emulsifying protein from other root-, tuber-, cereal-, nut- or legume types, or can obtain emulsifying protein from these other root-, tuber-, cereal-, nut- or legume types using common general knowledge.

Further, the native protein may also be in the form of glycated protein. Some foods containing native proteins foods are known to have astringency, especially milk type beverages at acidic pH. It has been found that astringency can be reduced when the protein is glycated with a reducing sugar in which the sugar is selected from the group consisting of reducing monosaccharides, reducing disaccharides, dextran. In this way the astringent taste of the native protein is reduced, while maintaining desirable functional properties such as the ability to stabilize oil in water emulsions. Such protein can be obtained according to WO2011/059330 and is incorporated herein in its entirety. When referring to native protein in this document, it may also refer to glycated proteins.

The method further comprises the step of isolating denatured protein from a root, tuber, cereal, nut or legume. In "Ernhärung Vol. 2, nr. 9, 1978, by Knorr and Steyer", a method is described wherein proteins are recovered from acidified potato juice by heating to a temperature of approximately 98-99°C to obtain denatured potato protein. The protein fraction is then concentrated by centrifugation, neutralized and dried via spray, freeze or drum drying. The skilled person can adapt these methods to obtain denatured protein from other root-, tuber-, cereal-, nut- or legume types, or can obtain denatured protein from these other root-, tuber-, cereal-, nut- or legume types using common general knowledge.

WO 2017/142406 describes a process to obtain coagulated potato protein for human food characterized by a low TGA and sugar content which is highly suitable for the preparation of a milk substitute according to the invention. Preferably, the denatured protein is coagulated protein. Denatured, preferably coagulated protein is added to increase the protein content in the milk substitute. The denatured, preferably coagulated protein preferably has a particle size distribution where 90% of the particle volume (d90) has a particle size below 250 µm, preferably, d90 is below 150 µm, most preferably d90 is below 50 µm. The particle size, expressed as d90, can be determined by laser diffraction using a Sympatec HELOS equipped with a RODOS dry disperser with a vibratory feeder. The RODOS dispersing line has an inner diameter of 4mm. Particle size is calculated by the integrated software using the "fraunhofer" formula.

A smaller particle size is preferred for two reasons. First, large particles result in poor organoleptic properties of the beverage. Second, large particles can sometimes give rise to production problems during production of the milk substitute, such as clogging of valves and/or of homogenizers, which are commonly used equipment in the production of milk type beverages. Such problems may be avoided by the use of other equipment, and the skilled person is capable of selecting such other equipment to avoid the said problems, but sometimes, it is more efficient to apply the mentioned equipment nonetheless. For this reason, denatured protein, preferably coagulated protein, with a smaller particle size is preferred. Most preferably, the denatured, coagulated protein has a particles size (d90) below 50 µm.

Methods to obtain the desired particle size are well known in the art. Denatured or coagulated protein can be wet or dry milled to reduce the particle size. Wet or dry sieving or wind sifting can be used to obtain protein particles in the desired particle size distribution. Another option to reduce particle size is ultrasonication of a protein suspension.

Protein is desirable for obtaining a product with nutritional properties that are similar to regular milk. It is not desirable to only include protein in its native form and no protein in denatured form in view of the high isolation costs, and the potential allergenic properties of some protein sources, such as for example soy and wheat protein. In addition, a protease inhibitor isolate may have antinutritional properties due to its inhibitory effects on protein digestion.

The method may further comprise the step of preparing a viscosifying starch. A viscosifying starch may be desirable to increase the viscosity, which provides additional stabilization of the emulsion. A viscosifying starch is in particular added in case the emulsifying agent alone does not provide a long-term stable emulsion. Additionally, a viscosifying starch may be added to improve the stability of the emulsion in the sense of preventing precipitation of denatured protein. Thus, the presence of viscosifying starch may increase among others shelf life.

A viscosifying starch is a starch which upon dissolution increases the viscosity of the mixture. A viscosifying starch can be prepared by isolating starch from a root, tuber, cereal, nut or legume to obtain an isolated starch, and optionally modifying at least a portion of said isolated starch to obtain a viscosifying starch. The starch can be obtained using known techniques in the art, which have been referenced above. In one embodiment, the isolated starch is used directly as viscosifying starch, without further modification thereof. Thus, in a preferred embodiment, the viscosifying starch is native starch, preferably native potato starch.

In another embodiment, the isolated starch is further at least partially modified. Suitable modifications for converting the isolated starch into a viscosifying starch are known in the art. Preferably, at least a portion of the isolated starch is subjected to a modification selected from the group consisting of degradation, cross-linking, acetylation, and hydroxypropylation to obtain the viscosifying starch.

Isolated starch may thus be used as such as viscosifying starch, but isolated starch may also be modified to obtain an emulsifying starch or a viscosifying starch. The method thus comprises a step of isolating starch from a root, tuber, cereal, nut or legume to obtain a first isolated starch, and modifying at least a portion of said first isolated starch to obtain an emulsifying starch, and may also comprise a step of isolating starch from a root, tuber, cereal, nut or legume to obtain a second isolated starch, and optionally modifying at least a portion of said second isolated starch to obtain a viscosifying starch. Alternatively and preferably, the isolated starch may be obtained in a single step, whereupon part of the isolated starch is modified to obtain an emulsifying starch, preferably an OSA-modified starch, and whereupon a (different) part of the isolated starch is used as a viscosifying starch or, preferably, whereupon part of the isolated starch is modified to obtain a viscosifying starch, preferably by a modification selected from the group consisting of degradation, cross-linking, acetylation, and hydroxypropylation.

The above-mentioned starch modifications are well known in the art. Degradation can be done by several methods, such as oxidation, acid degradation, and enzymatic hydrolysis. Starch oxidation can be done using oxidative reagents such as hydrogen peroxide or alkali metal hypochloride. The oxidation reaction may be carried out as a suspension or solution reaction in water. Preferably, the reaction is carried out as a suspension reaction in water, as this leads to a granular oxidized starch. Oxidised waxy potato or tapioca starch can be prepared according to WO00/06607. The person skilled in the art knows how to adapt the oxidation method when preparing oxidised starches from other botanical origins.

Acid degradation can be conducted as a suspension or solution reaction in water. Preferably, the reaction is carried out as a suspension reaction in water by treating the isolated starch slurry in water with an inorganic acid (*e.g.* HCl or H₂SO₄ or HNOs). The resulting viscosifying starch is called acid-degraded starch. Furthermore, starch can also be degraded enzymatically. Enzymatic degradation or hydrolysis can be conducted by treating the isolated starch with an enzyme, using alfa-amylase or amylomaltase after solubilization of the starch. After the starch solution has been incubated with the enzyme, the solution is clarified and the hydrolyzed starch is spray-dried. The resulting viscosifying starch is called amylase-treated or amylomaltase-treated starch. The skilled person can apply common general knowledge to obtain enzyme-treated viscosifying starch from other botanical origins.

Preferably the degraded starch is a granular acid degraded starch. Most preferably, the acid degraded starch is an acid degraded waxy starch, most preferably from potato. Such starches can be prepared according to the methods described in WO01/78526. The acid-degraded starch may have an average molecular weight in the range of 50 to 2500 kDa, preferably 100 to 2000 kDa.

In an alternative embodiment the viscosifying starch has been obtained by stabilization and crosslinking. Stabilization can be achieved by esterification or etherification of some or all hydroxyl groups on the starch backbone.

Esterification is in general done by reacting some or all of the hydroxyl groups with acetyl groups. Acetylation can be conducted by treating the isolated starch with acetic anhydride or vinyl acetate under alkaline conditions. The resulting viscosifying starch is called acetylated starch, which is a preferred type of viscosifying starch.

Etherfication can be done with several reagents in which the reagent has a halogen, halohydrin, epoxide or glycidyl group as reactive site. In a preferred embodiment the stabilization is achieved by hydroxyalkylation such as hydroxypropylation, hydroxybutylation, hydroxyethylation and/or carboxymethylation. These methods are generally known. Preferably, the viscosifying starch is a hydroxypropylated starch.

Hydroxypropylation can be conducted by treating the isolated starch with propylene oxide in aqueous suspensions under alkaline conditions. Suitable alkali materials are: sodium hydroxide, potassium hydroxide, ammonium hydroxide, magnesium hydroxide and sodium carbonate. Preferred are alkali metal hydroxides and sodium carbonate. Sometimes salts such as sodium chloride or sodium sulfate are added as swelling inhibitors to prevent swelling of granules during the reaction. The resulting viscosifying starch is called hydroxypropylated starch. These methods can be adapted using common general knowledge to obtain hydroxypropyated starch from a different botanical origin.

Preferred stabilized starch types are hydroxypropylated starch and acetylated starch. In case of acetylation and hydroxypropylation, the starch is preferably also cross-linked. Much preferred viscosifying starch is a stabilized and crosslinked starch, preferably a hydroxypropylated starch or an acetylated crosslinked starch (or a combination of the two). The starch is preferably waxy. Further preferably, the starch is a potato starch.

Crosslinking starch in itself is a method available to the person skilled in the art, and can be applied to starch of any botanical origin. Various crosslinking agents are known, for example, epichlorihydrin, sodium trimethaphosphate, phosphorous oxychloride (POCl₃), adipic anhydride, or other reagents with two or more anhydride units, halogen, halohydrin, epoxide or glycidyl groups or combinations thereof. A crosslinked starch may for example be cross-linked with 0.003 to 0.04 wt.%, preferably 0.01-0.2 wt.%, most preferably 0.01-0.03 wt.% adipic anhydride on dry starch. Prior to crosslinking with adipic anhydride, the starch may be treated with peracetic acid or hydrogen peroxide, with a quantity that refers to 0.001% to 0.0045% of active oxygen. The crosslinked starch is referred to as distarch adipate.

Further a starch may be crosslinked with sodium trimetaphosphate up to a such a degree that the residual phosphate content is no more than 0.14% for a potato starch and not more than 0.04% for other starches. Preferably the starch is crosslinked with 0.01% to 0.25%, most preferably with 0.025% to 0.15% sodium trimetaphosphate, under conditions known to the person skilled in the art. Sodium trimethaphosphate is used from 0 to 5000 mg/kg starch, preferable 250-2500 mg/kg starch. POCl3 is added in quantities ranging between 0 to 400, preferably 0 to 200, more preferably 25 to 100 µL/kg starch. Preferably the starch is crosslinked with sodium trimetaphosphate or phosphorous oxychloride. Such a starch may also be referred to as a distarch phosphate. The person skilled in the art may always find conditions outside these ranges, to prepare a starch with the desired properties, especially when reacting the reagents with low yield. In particular, hydroxypropylated and acetylated starch is preferably also cross-linked. Cross-linking may in this case be conducted after and/or during acetylation or hydroxypropylation.

Stabilised crosslinked non-cereal starches can be prepared according to the methods described in WO00/54607. A method to produce crosslinked hydroxypropylated starches from various botanical origins can be found in EP 1229049. In a preferred embodiment, the viscosifying starch is a combination of an acid degraded starch and a hydroxypropylated cross-linked starch. Preferably the crosslinked starch is a distarch phosphate.

In much preferred embodiments, the viscosifying starch is a mixture of two or more types of viscosifying starch as defined above. The viscosifying starch is preferably a mixture comprising degraded starch and stabilized crosslinked starch, as defined above. Most preferably, the viscosifying starch is a mixture comprising granular acid degraded starch, preferably a granular acid degraded waxy starch, and a stabilized crosslinked starch selected from an acetylated crosslinked starch, preferably an acetylated crosslinked waxy starch, and a hydroxypropylated crosslinked starch, preferably an hydroxypropylated waxy starch.

The different types of starch and protein that can be used in the method of the invention are further described below with respect to the milk substitute of the invention.

The method further comprises the step of preparing an emulsion comprising at least 0.3 wt.% of said emulsifying agent, at least 0.2 wt.% denatured protein, and at least 1.0, preferably at least 1.5 wt.% of said lipid. In case the method comprises the step of preparing a viscosifying starch, the emulsion further comprises at least 0.5 wt.% viscosifying starch. The total quantity of protein, (*i.e.* the sum of the protein present as emulsifying agent and of the denatured protein) in the emulsion is at least 0.5 wt.%. The preferred ranges of the ingredients is specified in more detail below with respect to the milk substitute according to the present invention.

In case a viscosifying starch and emulsifying starch are both to be included in the emulsion, the method may comprise the step of isolating a starch from a root, tuber, cereal, nut or legume, wherein at least one portion is modified to obtain an emulsifying starch and wherein another portion is used as a viscosifying starch, preferably a viscosifying modified starch.

The emulsion can be prepared by adding the ingredients to water and mixing. In particular, the emulsion may be prepared by suspending the plant-based or microbial lipid in water to obtain a lipid suspension and homogenizing the suspension with the emulsifying agent. In case a viscosifying starch is to be present in the emulsion, it can be added before or after homogenization. The denatured protein may be added before or after homogenization, but preferably, the denatured protein is added prior to homogenization.

The method may further comprise heat-treating the viscosifying and/or emulsifying starch, typically in water, prior to the homogenization step. A purpose of this step is to swell and/or dissolve the starches prior to the homogenization step. Thus, this step renders the starch in question cold water swellable or cold water soluble. Alternatively, cold water swellable or cold water soluble versions of the modified starches may be used. Cold water swellable or cold water soluble versions of starch are pregelatinized and subsequently dried versions of the starch in question, as is generally known. A further purpose of the heat treatment prior to the homogenization is to melt the lipid prior to homogenization.

Homogenization can be achieved using a suitable and available method known in the art. For example, the emulsion can be prepared using one or two stage homogenization. Homogenization is preferably conducted at elevated pressure, *e.g.* of at least 5 bar, more preferably 5 - 500 bar, more preferably 10-250 bar, more preferably 25-200 bar, for example at 100-200 bar. The first stage homogenization pressure can be from 40 bars to 450 bar, preferably from 100 to 250 bars, more preferably between 150-200 bars. The second stage homogenization pressure can be from 25 - 100 bar, preferably 40 to 80 bar, and more preferably 45-60 bar.

The first stage of homogenization is particularly important for a product with a fat level below 9% where viscosity is of importance, such as where particles may cluster after homogenization. The second stage of homogenization is important to make the final product smooth. The most preferred homogenization method to obtain the present milk substitute is two-stage homogenization at 150/50 bar (first stage 150 bar, second stage 50 bar). This is preferred to disrupt fat to small droplets, to reduce protein particle size and to allow for stabilization of the disrupted fat droplets with the emulsifying agent and obtain a smooth product.

In the present invention wherein native protein is used as emulsifier, the first stage homogenization is preferably performed at higher pressure, such as up 250 bar. For such compositions, homogenization conditions of 200/50 bar (first stage - 200 bar, the 2d stage - 50 bar) are preferred, more preferably 500/100 bar at neutral pH; at acidic pH (pH between 3-5) 150/50 bar can also be used.

An alternative method to prepare the emulsion is the usage of a high shear mixer such as Ultraturrax or IKA Magic LAB. For Ultraturrax or Silverson L4R Heavy Duty Mixer Emulsifier the applied emulsification shear can be between 3500 rpm to 8000 rpm, and most preferred 8000 rpm for 10-15 min up to 1 h. For IKA Magic LAB the emulsion formation can be conducted at speed of 3 000 rpm to 26 000 rpm, more preferred speed of 26 000 rpm. The temperature of the emulsion preparation should be above 40 °C, preferably between 60-70 °C, more preferably 65 °C. Homogenization may be conducted at a temperature of 50-90 °C, preferably 60-85 °C. The homogenization time may be 5 s to 5 min, preferably 10 s to 1 min (per 1 kg of product) or, depending on the batch volume, up to 60 min.

Homogenization may be conducted in one or more stages either by collecting a product obtained from a first homogenization and subjecting this product to a second stage of homogenization, or by collecting at least part of the homogenized emulsion and passing at least part of the emulsion again into the homogenizer.

In the present case where the emulsifying agent is or comprises an emulsifying protein, homogenization is preferably conducted at relatively mild conditions, *e.g.* at temperatures below 75 °C and/or using heating times of less than 5 minutes, preferably less than 2 minutes, most preferably less than 1 minute. Also, emulsifying proteins such as protease inhibitor may be subjected to homogenization at higher temperatures, *e.g.* above 80 °C, provided that the pH of the emulsion is between 3 and 5, in particular in between 3.5 and 4.5 during homogenization.

The method of the invention may further comprise the step of including one or more other ingredients, such as minerals and vitamins. These ingredients may be included such that the milk substitute resembles regular (e.g. cow's) milk. Each of the one or more ingredients may be included in the emulsion before, during, or after homogenization. Also, an ingredient can also be combined with the starch, such as modified starch and/or with the protein before the emulsion is formed. The ingredients that may be added are the same as those present in the milk substitute according to the invention and are described in detail below.

The method may further comprise a pasteurization or sterilization step. The pasteurization or sterilization is preferably conducted at a temperature of at least 50°C, at least 60 °C, more preferably a temperature of 70-95 °C, even more preferably a temperature of 72-85 °C for pasteurization and 100-140°C, preferably 120-140°C for 2-6 seconds for sterilization (UHT treatment). The pasteurization or sterilization can be performed by heat-treating the emulsion. However, given that an emulsifying protein is present in the milk substitute, heat treatment should be conducted as mild as possible to prevent denaturation of the native protein.

A preferred procedure for preparing a milk substitute comprises the steps of:
- mix the protein and starch, if any, and optionally other dry ingredients, to obtain a dry mix;
- mix the dry mix with water,
- hydrate the dry mix to obtain a starch/protein suspension, preferably for at least 5 min, preferably about 10 min, and further preferably under vigorous stirring;
- heat the starch/protein suspension to a temperature of 40-45 °C;
- add the fat, preferably slowly and under constant shear, to the starch/protein suspension to obtain a starch/protein/fat suspension, preferably after heating the fat to a temperature of 40-45 °C;
- heat the starch/protein/fat suspension to 50-95°C;
- Homogenize the starch/protein/fat suspension, preferably by a two stage 150/50 bars protocol, to obtain a milk substitute;

Optionally, pasteurizing the milk substitute, such as by heating to 50-85°C for 5 min, or by a UHT treatment, e.g. at 140°C for 2-6 sec. After preparation, the milk substitute can be filled into cups or containers, which is preferably achieved aseptically. Subsequently, the milk may be cooled, such as to 0 - 5 °C, and stored. Preferably, the milk is stored at 0 - 5 °C, preferably 2 - 4 °C for at least 24 hr prior to consumption, in order to obtain a smooth and equilibrized emulsion.

### Milk substitutes

The invention is further directed to a milk substitute comprising
- at least 1.0 wt.%, preferably at least 1.5 wt.%, preferably 1.5-7.5 wt.%, more preferably 3.0-5.0 wt.% of a plant-based or microbial lipid; and
- at least 0.3 wt.%, preferably at least 0.5 wt.%, more preferably 1.0-7.0 wt.% of root-, tuber-, cereal-, nut- or legume-derived protein; and
- at least 0.3 wt.%, more preferably 1.0-7.0 wt.% of a root-, tuber-, cereal-, nut- or legume-derived starch, preferably modified starch;
wherein at least 40 wt.% of said protein is denatured protein, preferably coagulated protein.

A milk substitute may comprise
- at least 1.0 wt.%, preferably at least 1.5 wt.%, preferably 1.5-7.5 wt.%, more preferably 3.0-5.0 wt.% of a plant-based or microbial lipid; and
- root-, tuber-, cereal-, nut- or legume-derived denatured protein, preferably in an amount of at least 0.2 wt.%; and
- at least 0.3 wt.%, preferably 1.0-7.0 wt.% of an emulsifying agent, which emulsifying agent is
   (a) a root-, tuber-, cereal-, nut- or legume-derived emulsifying starch; or
   (b) a root-, tuber-, cereal-, nut- or legume-derived emulsifying protein; or
   (c) a combination of the emulsifying starch under a) and the emulsifying protein under b);
   wherein the total amount of said denatured protein and said emulsifying protein is at least 0.5 wt.%, preferably at least 1.0 wt.%, more preferably at least 2 wt.%, more preferably at least 3 wt.%. The total amount of denatured protein and emulsifying protein is preferably in the range of 1.0-7.0 wt.%, preferably 2 - 6.5 wt.%, such as 2.5 - 6 wt.%.

In the present invention, the emulsion comprises at least 0.3 wt.%, preferably 0.5 - 7.0 wt.% of an emulsifying protein. In much preferred embodiments, the milk substitute comprises 0.3 - 1.2 wt.%, preferably 0.5 - 1 wt.% emulsifying protein. The total amount of denatured protein and emulsifying protein is preferably in the range of 1.0-7.0 wt.%, preferably 2 - 6.5 wt.%, such as 2.5 - 6 wt.%.

The milk substitute is an emulsion of the plant-based or microbial lipid in water. The milk substitute can be obtained by the method according to the invention, as described above. Starch in the milk substitute may comprise a viscosifying starch and/or an emulsifying starch.

The milk substitute comprises an emulsifying agent, which emulsifying agent comprises an emulsifying protein, and which emulsifying agent preferably also comprises an emulsifying starch. The milk substitute may further comprise a viscosifying agent (*e.g.* a viscosifying starch) to further stabilize the emulsion.

The milk substitute further comprises denatured protein, preferably coagulated protein. The denatured protein provides the milk substitute with a protein content as expected for regular (dairy) milk. These ingredients have already been described above with respect to the method of the invention and will also be further described below in more detail.

The milk substitute is intended for human consumption, and has palatable flavor and mouthfeel. The milk substitute may be a non-dairy milk. The non-dairy milk may be lactose free. The non-dairy milk may also be vegan (*i.e.* free of any animal derived ingredients).

The water content in the milk substitute may be at least 75 wt.%, preferably 80-90 wt.%, more preferably 83-88 wt.%. The water content is preferably similar to regular (e.g. cow's) milk, which has a water content of about 85-87 wt.%.

The plant-based or microbial-based lipid (also called "fat") may for example be coconut fat, shea fat, palm fat, rapeseed oil, rice oil, sunflower oil, olive oil, sesame oil, linen oil, pumpkin oil, walnut oil, a microbial oil, or any mixture of these types of fats.

The fatty acid composition of the milk substitute can be adapted by selecting one or more plant-based or microbial lipids, and mixing those to obtain a desirable fatty acid composition. Desirable may mean a fatty acid composition which resembles the fatty acid composition of cow's milk (or of goat's milk, sheep's milk, and the like), in other to obtain a fatty acid composition which mimics a natural milk. However, the skilled person appreciates that the fatty acid composition may also be optimized to obtain health benefits from the milk substitute, which are not obtained with natural milk. This may be achieved by including one or more types of microbial oil with a specific fatty acid composition, for example a fatty acid composition rich in polyunsaturated fatty acids (PUFAs). A milk with a significant content of polyunsaturated fatty acids, among which EPA, DHA, ARA, DPA and the like, may be beneficial to reduce blood pressure, to increase brain activity, or to decrease cancer risk. In embodiments wherein the quantity of PUFA is at least 0.25 g, preferably at least 1 g PUFA per liter milk substitute, said milk substitute may be applied for use in reducing blood pressure and/or for use in increasing brain activity and/or for use in the prevention of cancer. The milk substitute may thus serve in methods directed at the said purposes.

The root-, tuber-, cereal-, nut- or legume-derived protein may be a protein that has been derived from any root-, tuber-, cereal-, nut- or legume, preferably tuber, cereal or legume-derived protein. Preferably, the protein has been derived from hemp, pumpkin, lupin, quinoa, pearl millet, maize, fonio, pea, cassava, wheat, sweet potato, yam, sago, taro, soy, rice, oat, almond, cashew, or potato, preferably from soy (Glycine max), rice (Oryza sativa or Oryza glaberrima), oat (Avena sativa), almond (Prunus dulcis), cashew (Anacardium occidentale), or potato (Solanum tuberosum). Most preferably, the protein has been derived from potato. The protein may be obtained as denatured protein, preferably coagulated protein, as described above, and/or it may be obtained as native (emulsifying) protein, as also described above. In the present case where the milk substitute comprises native protein, the native protein and the denatured protein have preferably been derived from the same source, although they may derive from different sources, also.

Any starch used may have been derived from any edible root, tuber, cereal, nut or legume from which starch can be isolated. Preferably, the starch has been isolated from pea, cassava, wheat, sweet potato, yam, sago, taro, corn, pearl millet, maize, soy, rice, oat, almond, cashew, or potato, preferably soy (Glycine max), rice (Oryza sativa or Oryza glaberrima), oat (Avena sativa), almond (Prunus dulcis), cashew (Anacardium occidentale), or potato (Solanum tuberosum). Most preferably, the starch has been derived from potato. The starch can subsequently be converted to a viscosifying starch and/or an emulsifying starch, as applicable. Preferably, if both an emulsifying starch and a viscosifying starch are present in the milk substitute, the starch has been derived from the same source, *i.e.* from the same species of root, tuber, cereal, nut or legume. However, these two starches can also be derived from different sources.

In a preferred embodiment, the starch (the emulsifying starch and/or the viscosifying starch) and the protein (the emulsifying protein and/or the denatured protein) have been derived from the same species of root, tuber, cereal, nut or legume. Thus, the invention pertains to milk substitutes derived from pea, cassava, wheat, sweet potato, yam, sago, taro, corn, pearl millet, maize, soy, rice, oat, almond, cashew, or potato, preferably potato. A milk substitute of the invention may thus be called pea milk, cassava milk, wheat milk, sweet potato milk, yam milk, sago milk, taro milk, corn milk, pearl millet milk, maize milk, soy milk, rice milk, oat milk, almond milk, cashew milk, or potato milk. Preferably, the present invention is a potato milk.

The milk substitute may further comprise a viscosifying starch, as described in further detail elsewhere.

Regardless of the type of emulsifying agent used, preferably at least one viscosifying agent is present selected from hydroxypropylated cross-linked starch, acetylated cross-linked starch or native starch. This provides the milk substitute with a good stability. Furthermore, preferably a degraded starch is also present. A degraded starch may provide better organoleptic properties to the milk substitute. Preferably, the viscosifying starch is prepared from waxy starch.

The milk substitute may further comprise one or more ingredients other than starch and protein, such as minerals, vitamins, *etc.* In particular, ingredients are present in the milk substitute that are also typically present in regular milk, such as vitamins, minerals, organic acid, mineral acid, free amino acids, fibers, and/or flavonoids.

The milk substitute may further comprise a gum, such as preferably carrageenan, guar gum and/or xanthan gum. The concentration of the gum may be relatively low, *e.g.* 0.005-1.0 wt.%, preferably 0.01-0.5 wt.%, more preferably 0.1-0.3 wt.%. A gum may be applied as additional viscosifyer.

The milk substitute may further comprise vitamins. Preferably, at least one, more preferably at least 3, even more preferably at least 5, even more preferably all of the vitamins of the group consisting of thiamin (vitamin B1), riboflavin (vitamin B2), niacin (vitamin B3), pantothenic acid (vitamin B5), vitamin B6 (pyridoxine), vitamin B12 (cobalamin), vitamin C, and folate are present in the milk substitute. Such vitamins are also present in regular milk such as for example cow's milk.

The milk substitute may further comprise a sweetener. The sweetener may for example be a sugar, e.g. monosaccharides such as glucose or fructose, or disaccharides such as sucrose. Also, oligo-saccharides, such as maltodextrin, may be used as a sweetener. Preferably, glucose is used. The amount of sugar in the milk substitute may be 0.5-25 wt.%, preferably 1-15 wt.%, even more preferably 2-10 wt.%, even more preferably 3-5 wt.%. The sugar may be derived from a root, tuber, cereal, nut or legume.

Alternatively, the sweetener can be an non-sugar intense sweetener, such as for example aspartame, steviol glycosides, saccharin, sucralose and the like. The amount of the non-sugar sweetener may range between 20 and 600 mg/L, depending on the strength of the sweetener and the desired sweetness of the final drink.

Alternatively, the sweetener can be a non-sugar bulk sweetener or polyol, such as for example Xylitol, Erythritol, Mannitol, Isomalt, Sorbitol and the like. The amount of the polyol sweetener may be similar as the range of sugar as the sweetness of polyols is similar to that of sucrose.

The milk substitute may further comprise minerals. Examples of minerals that may be present in the milk substitute are calcium, magnesium, phosphate, sodium, potassium, and zinc. Preferably, a calcium salt and a phosphate salt are present (*e.g.* calcium phosphate). The milk substitute also preferably comprises one or more minerals selected from sodium, potassium and magnesium, such as for example sodium or potassium chloride.

Furthermore, the milk substitute may comprise an organic acid, a mineral acid, one or more free amino acids, one or more types of fiber, and/or one or more types of flavonoids.

Additionally, the milk substitute may comprise a dietary fibre. The dietary fibre may be a soluble or an insoluble fibre. Preferably, the fibre is a soluble fibre. Examples of soluble fibres are inulin, fructo-oligosaccharides, galacto-oligosaccharides, polydextrose, resistant dextrin/maltodextrin and/or beta-glucan rich fibres, etc. The fibres may be derived from the same source as the root-, tuber-, cereal-, nut- or legume-derived protein and/or the root-, tuber-, cereal-, nut- or legume-derived starch present in the milk substitute but may also have been derived from another species of root, tuber, cereal, nut or legume.

The milk substitute may also comprise further flavors, such as vanille, chocolate, and the like.

Additionally, the milk substitute may contain neutraceuticals to enhance the health benefits of the milk substitute.

In a preferred embodiment, the milk substitute only comprises the emulsifying agent described above, i.e. the emulsifying starch with or without the emulsifying protein. In such embodiments, the milk substitute does not comprise an additional emulsifier, such as for example fatty acid mono and/or diglycerides.

The viscosity of the milk substitute may be 1.0 to 350 mPas, preferably 1.5 to 250 mPas, more preferably 2.0 to 200 mPas as measured at 293 K using the Anton Paar rheometer using the bob/cup geometry. The viscosity was measured by transferring the potato milk in rheometer cup and subsequently allowed to equilibrate to 4 °C for 5 min, then the viscosity was measured for 2 min (120 s) at 10 1/s shear rate (20 point measurement every 6 s). The same procedure was repeated at 20 °C.

The inventors found that roughly two types of milk substitute can be distinguished. In the first type of milk substitute, the emulsifying agent is an emulsifying starch. In the second type of milk substitute, the protein comprises native protein, preferably native protease inhibitor. In this case, the native protein is the emulsifying agent in the milk substitute. The milk substitute of both the first and the second type preferably also comprises a viscosifying starch (in order to provide further emulsion stabilization) and/or a denatured protein (to increase to protein content of the milk substitute). The skilled person appreciates that the emulsifying agent can also be a mixture of native protein and emulsifying starch, in which case the respective quantities can be optimized by applying quantities as described in the present disclosure, and optionally some routine optimization. The two types of milk substitute will be discussed below.

### First type: milk substitute comprising an emulsifying starch

The milk substitute of the first type may comprise
(a) at least 1.0 wt.%, preferably at least 1.5 wt.%, preferably 1.5-7.5 wt.%, more preferably 3.0-5.0 wt.% of the plant-based or microbial lipid; and
(b) at least 0.3 wt.%, preferably at least 0.5 wt.%, more preferably 1.5-7.0 wt.%, even more preferably 2.0-5.0 wt.% of root-, tuber-, cereal-, nut- or legume-derived protein, which protein is preferably denatured protein, more preferably coagulated protein;
(c) at least 0.3 wt.%, preferably 0.5-7.0 wt.%, more preferably 1.0-4.0 of a root-, tuber-, cereal-, nut- or legume-derived starch, which starch is an emulsifying starch; and
(d) optionally 0-7.0 wt.%, preferably 1.0-6.0 wt.% of a second type of root-, tuber-, cereal-, nut- or legume-derived starch, which second type of starch is a viscosifying starch.
(e) optionally also at least 0.3 wt.%, preferably at least 0.7 wt.%, more preferably 1.0 - 7.0 wt.% of root-, tuber-, cereal-, nut- or legume-derived emulsifying protein, preferably comprising protease inhibitor.

The emulsifying starch present in the milk substitute of the first type is as defined above. The emulsifying starch is preferably a starch octenyl succinate, *i.e.* an octenyl succinic anhydride (OSA) modified starch. Preferably, the OSA modified starch has a degree of substitution of 0.01-0.05. The emulsifying starch is further preferably a waxy starch. OSA-modified starch was found to be very effective in emulsifying oil, both in the presence and in the absence of a viscosifying agent.

In addition to the emulsifying starch, the milk substitute of the first type may further comprise a viscosifying starch, preferably an acid-degraded starch, a stabilized starch, or a combination of these two starches. The viscosifying starch is preferably waxy. The stabilized starch is preferably a stabilized crosslinked starch, more preferable an acetylated crosslinked starch or a hydroxypropylated crosslinked starch, even more preferably an acetylated distarch phosphate or a hydroxypropylated distarch phosphate, most preferably a hydroxypropylated distarch phosphate.

Preferably, at least 10 wt.% of the viscosifying starch is acid-degraded starch, more preferably 20-50 wt.% of the viscosifying starch is an acid-degraded starch. The presence of acid-degraded starch is desirable as it is capable of masking the off-taste of potato protein.

In a preferred embodiment, the viscosifying starch is a combination of an acid-degraded starch and a hydroxypropylated cross-linked starch. In this case, the weight ratio between the acid-degraded starch and the hydroxypropylated cross-linked starch may be between 1/10 and 2/1, preferably between 1/3 and 1/1.

The milk substitute may comprise about equal amounts of viscosifying starch and emulsifying starch. Accordingly, the weight ratio between the viscosifying starch and the emulsifying starch in the emulsion may be between 1/5 and 5/1, preferably between 1/3 and 3/1.

### Second type: milk substitute comprising an emulsifying protein

The milk substitute of the second type may comprise
- at least 1.0 wt.%, preferably at least 1.5 wt.%, preferably 1.5-7.5 wt.%, more preferably 3.0-5.0 wt.% of the plant-based or microbial lipid; and
- at least 0.3 wt.%, preferably at least 0.7 wt.%, more preferably 1.0-7.0 wt.% of root-, tuber-, cereal-, nut- or legume-derived native protein, which native protein preferably comprises protease inhibitor;
- at least 0.3 wt.%, preferably at least 0.5 wt.%, more preferably 1.0-7.0 wt.% of root-, tuber-, cereal-, nut- or legume-derived denatured protein, which denatured protein is preferably coagulated protein;
- at least 0.5 wt.%, preferably 0.5-7.0 wt.%, more preferably 1.0-6.0 wt.% of a root-, tuber-, cereal-, nut- or legume-derived starch, preferably modified starch, which starch is a viscosifying starch;
- optionally a second type of root-, tuber-, cereal-, nut- or legume-derived starch, which second type of starch is an emulsifying starch, preferably an OSA modified starch, which may be present in an amount of at least 0.3 wt.%, preferably 0.5-7.0 wt.%, more preferably 1.0-4.0% of the weight of the emulsion.

The native (emulsifying) protein preferably comprises protease inhibitor. Native protein has good emulsifying properties and can thus act as an emulsifying agent. The native protein is preferably a low molecular weight protein, having a molecular weight of below 35 kDa, preferably in the range of 4-30 kDa. The native protein is preferably in the form of a protein isolate, more preferably in the form of a protease inhibitor isolate. Such an isolate may comprise different types of protease inhibitors.

The milk substitute of the second type may comprise a viscosifying starch. The viscosifying starch preferably comprises an acid-degraded starch, a hydroxypropylated crosslinked starch, an acetylated crosslinked starch a native starch, or a combination of two or all of these starches. These starches have been described above. Preferably, the viscosifying starch comprises an acid degraded waxy starch and a stabilized distarch phosphate from waxy starch, as described above.

In addition to the viscosifying starch, the milk substitute of the second type may further comprise a second type of starch, which second type of starch is an emulsifying starch, preferably OSA-modified starch. The emulsifying starch has been described above.

The denatured protein also has been described above.

### Powder compositions

In a further aspect, a powder composition for preparing a milk substitute is described, comprising 25 - 80 wt.% of a root-, tuber-, cereal-, nut- or legume-derived protein, and 20 - 75 wt.% of a root-, tuber-, cereal-, nut- or legume-derived starch. The powder composition can be used as an ingredient to prepare the milk substitute of the invention (as defined above) or the milk substitute-based product of the invention (as defined below).

The powder composition comprises an emulsifying agent, which emulsifying agent is (a) a root-, tuber-, cereal-, nut- or legume-derived modified starch, preferably a starch octenyl succinate; or (b) a root-, tuber-, cereal-, nut- or legume-derived native protein; or (c) a combination of said modified starch and said native protein. Furthermore, the powder composition comprises denatured protein, preferably coagulated protein. Preferably, the powder composition also comprises a root-, tuber-, cereal-, nut- or legume-derived viscosifying starch.

Similar as the milk substitute defined above, the powder composition can be divided into two types, the first type comprising an emulsifying starch, the second type comprising an emulsifying protein (*i.e.* a native protein).

The invention is directed to a powder composition for the preparation of a milk substitute as defined above, comprising - 25 - 80 wt.% of a root-, tuber-, cereal-, nut- or legume-derived protein, wherein said protein comprises emulsifying protein and denatured protein, wherein the emulsifying protein preferably comprises protease inhibitor.

Preferably, the powder composition of the invention further comprises 20-75 wt.% of a root-, tuber-, cereal-, nut- or legume-derived starch, wherein said starch comprises a viscosifying starch, preferably comprising an acid-degraded starch, a hydroxypropylated crosslinked starch, an acetylated crosslinked starch, a native starch or a combination of two or more of these starches, and wherein the viscosifying starch is preferably a waxy starch.

Further preferably, the powder composition of the invention also comprises an emulsifying starch, preferably a starch octenyl succinate, wherein the emulsifying starch is preferably a waxy starch.

Accordingly, a powder composition may be a composition comprising 25 - 80 wt.% of a root-, tuber-, cereal-, nut- or legume-derived protein, and 20 - 75 wt.% of a root-, tuber-, cereal-, nut- or legume-derived starch, wherein
(i) said starch comprises an emulsifying starch, or a viscosifying starch, or both,
   wherein the emulsifying starch is preferably a starch octenyl succinate,
   wherein the viscosifying starch comprises an acid-degraded starch, a hydroxypropylated crosslinked starch, a native starch, an acetylated crosslinked starch or a combination of two or all of these starches,
   wherein the viscosifying starch is preferably a waxy starch, and
   wherein the emulsifying starch is preferably a waxy starch; and
(ii) said protein comprises denatured protein and optionally also native (emulsifying) protein,
   wherein the native protein preferably comprises protease inhibitor.
   provided that the powder composition comprises at least one of an emulsifying starch and a native protein.

In the present invention, the emulsifying agent in the powder composition comprises an emulsifying protein as defined elsewhere, and preferably also comprises an emulsifying starch, as defined elsewhere. The emulsifying starch, viscosifying starch, native protein and denatured protein are each as defined above.

In the present invention the powder composition comprises a native protein (*i.e.* an emulsifying protein). In one embodiment, the composition is preferably devoid of emulsifying starch. In this case, the powder composition comprises at least 25 wt.% protein, wherein at least 10 wt.% of said protein is native protein comprising protease inhibitor.

The emulsifying protein is preferably present in the powder composition in an amount of at least 8 wt.%, more preferably at least 10 wt.%. Accordingly, the protein in the powder composition then comprises both native and denatured protein.

In a further preferred embodiment, at least 25 wt.% of said protein is denatured protein, preferably coagulated protein. Preferably, the native protein comprising protease inhibitor is a protease inhibitor isolate.

The powder composition comprises denatured protein. The amount of denatured protein present in the powder composition may be at least 5 wt.%, preferably at least 10 wt.%, such as at least 15. wt.%. Preferably, the denatured protein is coagulated protein. The denatured protein has been described in more detail elsewhere.

The powder composition preferably comprises a viscosifying starch. The amount of viscosifying starch present in the powder composition may be at least 10 wt.%, preferably at least 20 wt.%, such as at least 25. wt.%.

In case the powder composition comprises an emulsifying starch, the emulsifying starch is preferably present in an amount of at least 8 wt.%, more preferably at least 10 wt.%, for example at least 15 wt.%.

The root-, tuber-, cereal-, nut- or legume-derived protein and the root-, tuber-, cereal-, nut- or legume-derived starch, preferably modified starch present in the powder composition may have been derived from the same species of root, tuber, cereal, nut or legume, as described above. Preferably, both are derived from potato. Nevertheless, the protein and starch may also have been derived from different species, although at least one of them has preferably been derived from potato. Thus, the invention also pertains to milk substitute powder based on pea, cassava, wheat, sweet potato, yam, sago, taro, corn, pearl millet, maize, soy, rice, oat, almond, cashew, or potato, preferably potato. A milk substitute powder of the invention may thus be called pea milk powder, cassava milk powder, wheat milk powder, sweet potato milk powder, yam milk powder, sago milk powder, taro milk powder, corn milk powder, pearl millet milk powder, maize milk powder, soy milk powder, rice milk powder, oat milk powder, almond milk powder, cashew milk powder, or potato milk powder. Preferably, the present invention is potato milk powder.

The powder composition may further comprise additional ingredients. For example, the powder composition may comprise minerals (as defined above for the milk substitute) and/or vitamins (as defined above for the milk substitute). These may be present in the powder composition in an amount of 0-20 wt.%, preferably 0.1-10 wt.%, more preferably 0.5-5 wt.%. Further ingredients that may be present in the powder composition are one or more of an organic acid, a mineral acid, free amino acids, fiber, and flavonoids.

In a further aspect, the invention is also directed to a method of preparing a milk substitute or milk substitute based product, comprising suspending at least 1.0 wt.%, preferably at least 1.5 wt.% of a plant-based or microbial lipid in water to obtain a lipid suspension, and combining said lipid suspension with a powder composition according to the invention. This step may be conducted in the same way as the emulsion preparation step defined above for the method of the invention. Accordingly, the method may for example also include homogenization as defined above.

In a further aspect, the invention is directed to a general method of preparing a milk substitute comprising the steps of providing an emulsifying agent (as defined above), providing an isolated denatured protein (as defined above), providing a plant-based or microbial lipid (as defined above); and preparing an emulsion comprising at least 0.3 wt.% of said emulsifying agent, at least 0.2 wt.% of said denatured protein, at least 0.5% viscosifying starch, and at least 1.0 wt.%, preferably at least 1.5 wt.% of said lipid; wherein the combined amount of said native protein and said denatured protein in the emulsion is at least 0.5 wt.%. The step of preparing the emulsion can be conducted in the same way as the emulsion preparation step defined above. Accordingly, the method may for example also include homogenization as defined above.

In a further aspect, the invention is directed to a method for obtaining a milk substitute, comprising providing a milk substitute powder as defined elsewhere and homogenizing said powder in the presence using the described conditions to obtain

In a further aspect, the invention is directed to a milk substitute based product. A milk substitute based product is a product based on the milk substitute as defined above. The milk substitute based products may be for example milk, yoghurt, vla, cream, crème fraiche, butter or cheese. For example, the milk substitute based product may be buttermilk, yoghurt drink, frozen yoghurt, quark, cottage cheese, whipped cream, crème fraiche, or curd cheese *etc.* These products are typically dairy products, but the invention provides for non-dairy versions of these products. A milk substitute of the invention can be processed in much the same way as regular milk in order to obtain the said milk-substitute based product. These methods are generally known.

The milk substitute based product may be a product comprising the milk substitute according to the invention. The milk substitute based product may also comprise a concentrated milk substitute according to the invention. A concentrated milk substitute may contain the same ingredients as defined above, but has a lower water content, for example less than 75 wt.% or less than 50 wt.%.

The milk substitute based product may also be a product comprising the powder composition according to the invention. The powder composition is as defined above.

For the purpose of clarity and a concise description features are described herein as part of the same or separate embodiments, however, it will be appreciated that the scope of the invention may include embodiments having combinations of all or some of the features described. The invention will be illustrated in the following examples.
The following ingredients have been used to prepare the milk substitute

| Commercial name | Functionality | Modification type |
|---|---|---|
| | | |
| Eliane MC160 | Emulsifying starch | OSA-modified waxy potato starch |
| Solanic 300 | Emulsifying protein | Native protein (protease inhibitor) |
| Eliane VE580 | Viscosifying starch | Hydroxypropylated waxy potato distarchphosphate (hydroxypropylated crosslinked waxy potato starch) |
| Farinex VA15 | Viscosifying starch | Hydroxypropylated potato distarchphosphate |
| Farinex VA70 | Viscosifying starch | Hydroxypropylated potato distarchphosphate |
| Selectamyl D20 | Viscosifying starch | Native potato starch |
| Eliane gel 100 | Viscosifying starch | Acid degraded waxy potato starch |
| Solanic 100 | Denatured protein | Coagulated potato protein |
| Pisane C9 | Denatured protein | Coagulated pea protein |
| Oryzatein SG-B/N | Denatured protein | Rice protein |
| | Lipid | Coconut fat |
| | Sweetener | Sucrose |
| | Mineral | K2HO4 |
| | Mineral | CaCl2 |
| | Mineral | NaCl |

Coagulated potato protein (Solanic 100) was grinded and sieved prior to use in such a way that 90 wt% of the particles is less than 50 µm and 50 wt% of the particles is less than 20 µm.

The native protease inhibitor protein isolate is commercially available as Solanic 300 from Avebe, the Netherlands.

### Example 1: Milk Substitute comprising an Emulsifying Protein

A potato-based milk substitute was prepared by first isolating starch, native protein and coagulated protein from a potato. The plant-based lipid was suspended in water in a Thermomix and the temperature was raised until the lipid melted, while stirring. The denatured protein and emulsifying protein and optionally the emulsifying starch and the viscosifying starch, if any, were added and after at least 10 minutes hydration the temperature was increased to 70-75°C while stirring. The suspension was then subjected to homogenization to form the milk substitute. The two stage homogenization pressure was 150/50 bar at 65-70 °C performed by using TwinPANDA 600 according to standard homogenizer user manual. Emulsions comprising native protein were pasteurized at a temperature of 70 °C for 20 s. In the presence of native protein, the emulsion was pasteurized at a temperature of 70 °C for 20 s. Emulsions which did not comprise native protein were pasteurized at a temperature of 80 °C for 30 s.

Coagulated protein was isolated from potato according to the method described in WO 2017/142406. The coagulated potato protein is commercially available as Solanic 100 from Avebe, the Netherlands.

Coagulated protein Pisane C9 and Oryzaten SG-B/N were purchased from ex. Cosucra, Belgium and ex. Axiom Foods, LA, USA, respectively.

A hydroxypropylated cross-linked potato starch was obtained as described in WO00/54607. Such starches are commercially available as Eliane VE580, Farinex VA15 or Farinex VA70 from Avebe, the Netherlands. A second modified starch was prepared by subjecting isolated waxy potato starch to acid degradation. This starch is also available as Eliane gel 100 from Avebe.

Selectamyl D20 is a fine fraction of native potato starch obtained by sieving and commercially available from Avebe, the Netherlands.

Varying amounts of emulsifying protein were used and the emulsions were pasteurized at a temperature of 70 °C for 20 s. The compositions of the sample are shown in Table 1.

The emulsifying protein was prepared by isolating a native protease inhibitor protein isolate from potato according to the method described in WO2008069650. The native protease inhibitor protein isolate is commercially available as Solanic 300 from Avebe, the Netherlands.

**Table 1: Milk Substitutes comprising varying amounts of emulsifying protein (wt.%)**

| | I | O | P2 | Q | R | E4 |
|---|---|---|---|---|---|---|
| coconut fat | 4.0 | 4.0 | 2.0 | 4.0 | 4.0 | 4.0 |
| denatured protein (Solanic 100) | 4.0 | 4.0 | 4.0 | 4.0 | 4.0 | 4.0 |
| sugar (sucrose) | 4.0 | 4.0 | 4.0 | 4.0 | 4.0 | 4.0 |
| emulsifying protein (Solanice 300N) | 0 | 0.2 | 0.3 | 0.5 | 0.7 | 1.0 |
| hydroxypropylated cross-linked starch (Eliane VE580) | 1.0 | 1.0 | 1.0 | 1.0 | 1.0 | 1.0 |
| viscosifying starch (acid-degraded starch, Eliane gel 100) | 0.5 | 0.5 | 0.5 | 0.5 | 0.5 | 0.5 |
| NaCl | 0 | 0.08 | 0.08 | 0.08 | 0.08 | 0.08 |
| CaCl₂ | 0.12 | 0.12 | 0.12 | 0.12 | 0.12 | 0.12 |
| K₂HPO₄ x 3 H₂O | 0.1 | 0.1 | 0.1 | 0.1 | 0.1 | 0.1 |
| water | 85.3 | 85.1 | 85.0 | 84.8 | 84.6 | 84.3 |
| stability | 0 | 0 | + | + | ++ | +++ |

The emulsion of sample O was found not to be stable enough. The 0.2 wt.% is considered to be insufficient. Sample P2 had acceptable stability, but showed sedimentation after 2 days. Samples Q and R were considered to have a good stability. Sample E4 showed the best stability. Consequently, at least 0.3 wt.% emulsifying protein is required.

### Example 2: Milk Substitute comprising different viscosifying starches

A milk substitute was prepared using a similar method as Example 1. However, instead different viscosifying starches were used. Further viscosifying starches that were tested are:
- Farinex VA70, which is a hydroxypropylated cross-linked potato starch.
- Selectamyl D20 which is native potato starch.
The compositions of the samples are shown in Table 2.

**Table 2. Influence viscosifying starch on stability of milk substitutes (wt.%)**

| **Influence viscofyer** | ES | E4 | 709 | 12 | TS |
|---|---|---|---|---|---|
| Coconut fat | 40 | 40 | 20 | 40 | 40 |
| Solanic 100 | 40 | 40 | 20 | 30 | 40 |
| Solanic 300 | 10 | 10 | 10 | 10 | 10 |
| Eliane VE580 | 0 | 10 | 0 | 0 | 0 |
| Selectamyl D20 | 0 | 0 | 10 | 0 | 0 |
| Farinex VA70 | 0 | 0 | 0 | 10 | 15 |
| Eliane gel 100 | 0 | 5 | 5 | 0 | 0 |
| Sugar | 40 | 40 | 5 | 30 | 40 |
| K2HO4P x 3 H2O | 1 | 1 | 1 | 1 | 1 |
| CaCl2 | 1,2 | 1.2 | 1.2 | 1,2 | 1,2 |
| NaCl | 0,8 | 0,8 | 0.8 | 1 | 1 |
| water | 867 | 843 | 928 | 876,8 | 853 |
| Pasteurization temp. | 70°C, 20s | 70°C, 20s | 70°C, 20s | 70°C, 20s | 70°C, 20s |
| Homogenisation pressure (bar) | 150/50 | 150/50 | 150/ 50 | 150/50 | 150/50 |
| *Suitability* | + | +++ | +++ | + | +++ |
| *After 2-3 wks* | *Stable emulsion, with some sediment* | *Stable* | *Stable* | *Stable* | *Stable but thick,* |

Table 2 shows that in absence of a viscosifying starch sedimentation of protein particles occurs despite the fact that the emulsion is stable (recipe ES). Due to the presence of different types of viscosifiers or combinations thereof (recipes E4, 709, 12 and TS), stable emulsions were obtained.

### Example 3: Effect of type of protein

Milk substitutes with different types of protein were prepared according to Example 2 using native protein as emulsifying agent. The sample comprising only native protein as protein (SVA) source was pasteurized at 50°C. The results are shown in Table 3.

Table 3 shows that stable emulsions can be obtained using different protein sources. Similar to the recipe I in table 1, Example 3, recipe 3 shows that denatured pea protein is not able to stabilize a milk type emulsion comprising fat. Example 3, recipes E4, E5, 711, 712 and 713 show that a composition comprising denatured proteins from different plant sources in combination with a native protein can be used to produce milk type emulsions. Table 3, recipes SVA, IV and 904 show excellent milk type emulsions were obtained using native potato protein as emulsifying protein. The Example "Combi" shows that a combination emulsifying protein (Solanic 300) and emulsifying starch (Eliane MC160) can be used to prepare a stable milk type emulsion.

**Table 3. Effect of different denatured protein sources (wt.%)**

| **Ingredient** | 3 | E4 | E5 | 711 | 713 | 715 | SVA | IV | 904 | Combi |
|---|---|---|---|---|---|---|---|---|---|---|
| Coconut fat | 40 | 40 | 40 | 20 | 20 | 20 | 40 | 40 | 20 | 40 |
| Solanic 300 | 0 | 10 | 10 | 10 | 10 | 10 | 40 | 40 | 20 | 5 |
| Solanic 100 | 0 | 40 | 0 | 10 | 0 | 0 | 0 | 0 | 0 | 40 |
| Pisane C9 (pea protein) | 40 | 0 | 40 | 0 | 10 | 0 | 0 | 0 | 0 | 0 |
| Oryzatein SG-B/N (rice protein) | 0 | 0 | 0 | 0 | 0 | 10 | 0 | 0 | 0 | 0 |
| Eliane MC160 | 0 | 0 | 0 | 0 | 0 | 0 | 0 | 0 | 0 | 5 |
| Eliane VE580 | 0 | 10 | 10 | 10 | 10 | 10 | 0 | 10 | 10 | 10 |
| Farinex VA70 | 0 | 0 | 0 | 0 | 0 | 0 | 15 | 0 | 0 | 0 |
| Eliane gel 100 | 0 | 5 | 5 | 5 | 5 | 5 | 0 | 5 | 5 | 5 |
| Sugar | 40 | 40 | 40 | 5 | 5 | 5 | 40 | 40 | 5 | 40 |
| K2HO4P x 3 H2O | 1 | 1 | 1 | 1 | 1 | 1 | 1 | 1 | 1 | 1 |
| CaC12 | 1.2 | 1.2 | 1.2 | 1.2 | 1.2 | 1.2 | 1.2 | 1.2 | 1.2 | 1.2 |
| NaCl | 0 | 0.8 | 0.8 | 0.8 | 0.8 | 0.8 | 2 | 2 | 0 | 0.8 |
| water | 878 | 843 | 853 | 938 | 938 | 938 | 853 | 863 | 938 | 852 |
| Pasteurizatio n temp. | 80°C, 30s | 70°C, 20s | 70°C, 20s | 70°C, 20s | 70°C, 20s | 70°C, 20s | 50°C, 30s | 70°C, 30s | 70°C, 20s | 70°C, 30s |
| Homogenisation pressure (bar) | 150/50 | 150/50 | 150/50 | 150/50 | 150/50 | 150/50 | 150/50 | 150/50 | 150/50 | 150/50 |
| *Suitability* | *0* | ++ | ++ | ++ | ++ | ++ | +++ | +++ | +++ | ++ |
| *After 2-3 wks* | *Unstable* | *Stable* | *Stable* | *Stable* | *Stable* | *Stable* | *Stable* | *Stable* | *Stable* | *Stable* |

## Claims

1. A milk substitute, comprising
(a) at least 1.0 wt.% of a plant-based or microbial lipid;
(b) at least 0.3 wt.% of root-, tuber-, cereal-, nut- or legume-derived protein;
(c) at least 0.3 wt.% of a root-, tuber-, cereal-, nut- or legume-derived starch, which starch is an emulsifying starch;
(d) 0-7.0 wt.% of a second type of root-, tuber-, cereal-, nut- or legume-derived starch, which second type of starch is a viscosifying starch.

2. A milk substitute according to claim 1, wherein the root-, tuber-, cereal-, nut- or legume-derived protein comprises an emulsifying protein.

3. A milk substitute according to claim 1 or 2, wherein the root-, tuber-, cereal-, nut- or legume-derived protein has been derived from hemp, pumpkin, lupin, quinoa, pearl millet, maize, fonio, pea, cassava, wheat, sweet potato, yam, sago, taro, soy, rice, oat, almond, cashew, or potato, preferably from soy, rice, oat (Avena sativa), almond, cashew, or potato.

4. A milk substitute according to any of claims 1-3, wherein the root-, tuber-, cereal-, nut- or legume-derived protein comprises a native protease inhibitor, preferably a native protease inhibitor as present in a potato protease inhibitor isolate.

5. A milk substitute according to any of claims 1-4, wherein the emulsifying starch is an octenyl succinic anhydride (OSA) modified starch.

6. A milk substitute according to any of claims 1-5, wherein the emulsifying starch and/or the viscosifying starch has been isolated from pea, cassava, wheat, sweet potato, yam, sago, taro, corn, pearl millet, maize, soy, rice, oat, almond, cashew, or potato, preferably soy, rice, oat, almond, cashew, or potato.

7. A milk substitute according to any of claims 1-6, further comprising a viscosifying starch, preferably an acid-degraded starch, a stabilized starch, or a combination of these two starches.

8. A milk substitute according to any of claims 1-7, wherein the plant-based or microbial lipid comprises coconut fat, shea fat, palm fat, rapeseed oil, rice oil, sunflower oil, olive oil, sesame oil, linen oil, pumpkin oil, walnut oil, a microbial oil, or any mixture thereof.

9. A milk substitute according to any of claims 1-8, wherein the weight ratio between the viscosifying starch and the emulsifying starch is between 1/5 and 5/1, preferably 1/3 and 3/1.

10. A milk substitute according to any of claims 1-9, further comprising a calcium salt and a phosphate salt, preferably calcium phosphate.

11. A milk substitute according to any of claims 1 - 10, further comprising one or more minerals selected from sodium, potassium and magnesium, preferably sodium or potassium chloride.

12. A milk substitute according to any of claims 1 - 11, further comprising a gum
